# EUROPÄISCHE PATENTSCHRIFT

(11) **EP 0 686 702 B1**
(45) Veröffentlichungstag und Bekanntmachung des Hinweises auf die Patenterteilung: **28.02.2001**
(21) Anmeldenummer: 95106622.4
(22) Anmeldetag: 03.05.1995
(51) Int. Cl.: C21D 9/00, B22D 11/124

(54) **Verfahren zur Erzeugung von Warmbreitband**
Process for producing hot wide strip
Procédé pour la fabrication de bandes larges à chaud

(30) Priorität: 13.05.1994 DE 4416752
(43) Veröffentlichungstag der Anmeldung: 13.12.1995
(73) Patentinhaber: SMS Demag AG, 40237 Düsseldorf (DE)
(72) Erfinder: Kosanovich, Milan, Kentucky 41091 (US); Rohde, Wolfgang, Prof. Dr., D-41542 Dormagen (DE)
(74) Vertreter: Valentin, Ekkehard, Dipl.-Ing.

(56) Entgegenhaltungen:
- EP-A- 0 587 150
- EP-A- 0 593 002
- EP-A- 0 650 790
- DE-A- 3 525 457
- PATENT ABSTRACTS OF JAPAN vol. 9 no. 51 (M-361) [1774] ,6.März 1985 & JP-A-59 189001 (SUMITOMO DENKI KOGYO KK) 26.Oktober 1984,
- CAHIERS D'INFORMATIONS TECHNIQUES DE LA REVUE DE METALLURGIE, Bd. 79, Nr. 1, Januar 1982 PARIS FR, Seiten 29-39, J.P. BIRAT ET AL 'Réglage du refroidissement secondaire en coulée continue d aciers pour tôles fortes.'

## Beschreibung

Die Erfindung betrifft ein Verfahren für die Erzeugung von Warmbreitband mit einer Produktionsanlage, bestehend aus einer Stranggießanlage für Dünnbrammen zwischen 40 und 70 mm, einem Ausgleichofen und einem Walzwerk, wobei die Austrittstemperatur der Dünnbramme aus der Stranggießmaschine oberhalb von 950 °C liegt.

Die Erfindung ist in den Ansprüchen 1 und 2 deteniert.

In einer unter dem Namen CSP-Anlage bekanntgewordenen Ausführungsform einer Produktionsanlage für die wirtschaftliche Erzeugung von Warmbreitband wird eine 40 bis 70 mm Dünnbramme nach der Erzeugung in einer Stranggießanlage und nach Temperaturausgleich in einem Rollenherdofen unmittelbar in einer mehrgerüstigen Walzstraße ausgewalzt. Üblicherweise liegt hierbei die Temperatur der Dünnbramme nach dem Austritt aus der Stranggießanlage zwischen 950 und 1100 °C. Im Rollenherdofen wird eine über Brammendicke und Brammenlänge gleichförmige Temperatur von zum Beispiel 1100 °C eingestellt.

Kennzeichnend für das beschriebene Verfahren ist der Sachverhalt, daß vor der ersten Verformung in der Walzstraße keine Austenit-Ferrit/Perlit-Umwandlung stattfindet. Der nach der Erstarrung in der Stranggießanlage entstehende Primäraustenit bleibt bis zur ersten Verformung in der Walzstraße erhalten.

Das beschriebene Verfahren sichert höchstmögliche Einsparung an Energie, insbesondere bei solchen Ausführungsformen, bei denen die Temperatur hinter der Stranggießanlage wenig unterhalb der angestrebten Temperatur hinter dem Rollenherdofen liegt. Der erforderliche Energieaufwand für den Temperaturausgleich im Rollenherdofen kann in solchen Fällen auf ein absolutes Minimum gehalten werden.

Das Verfahren hat sich sowohl für den Einsatz von Schrott erster Wahl mit Beimischungen von direktreduziertem Eisen als auch für den Einsatz von konverterbehandeltem Rohstahl bestens bewährt. Nachteile werden jedoch bei Einsatz von Schrott zweiter Wahl, insbesondere bei Beimischungen von Kupfer erwartet. Während der Zunderbildung beim Durchlauf durch den Rollenherdofen wird sich das freiwerdende Kupfer an den Korngrenzen des Primäraustenits ansammeln und den Verbund der Korngrenzen im Oberflächenbereich lösen. Je nach Grad des Kupfergehaltes und je nach Grad der Verzunderung kann diese Erscheinung bei der Verformung in der nachfolgenden Walzstraße zum sogenannten Lötbruch führen.

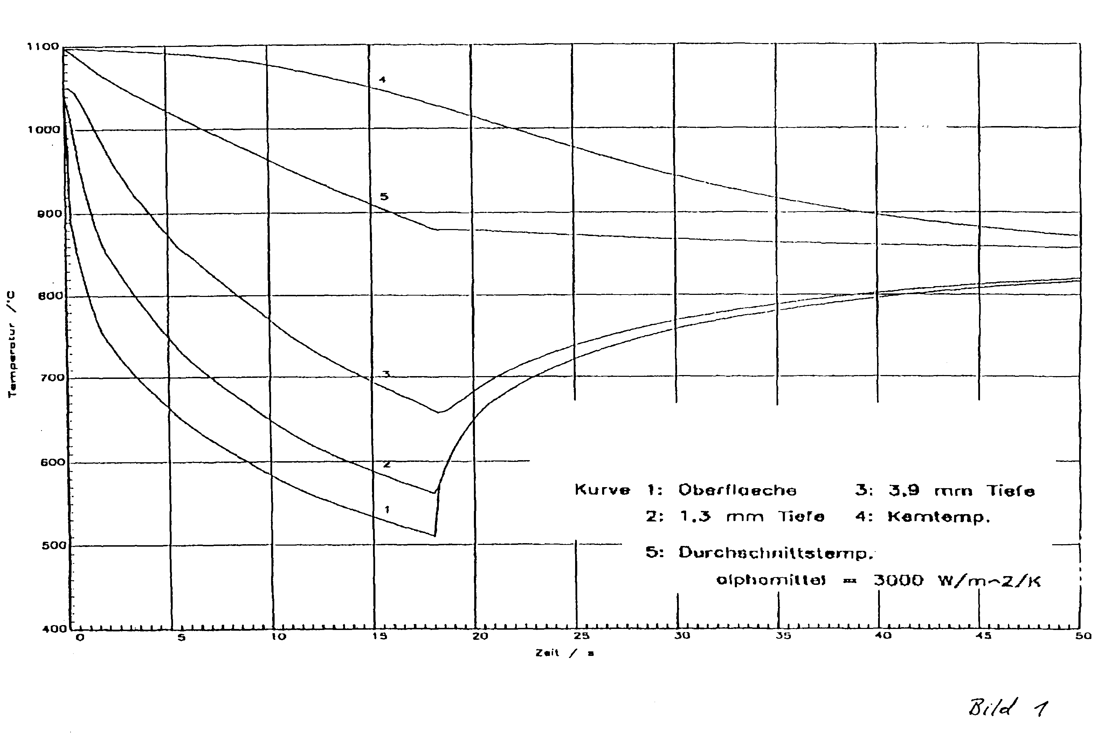

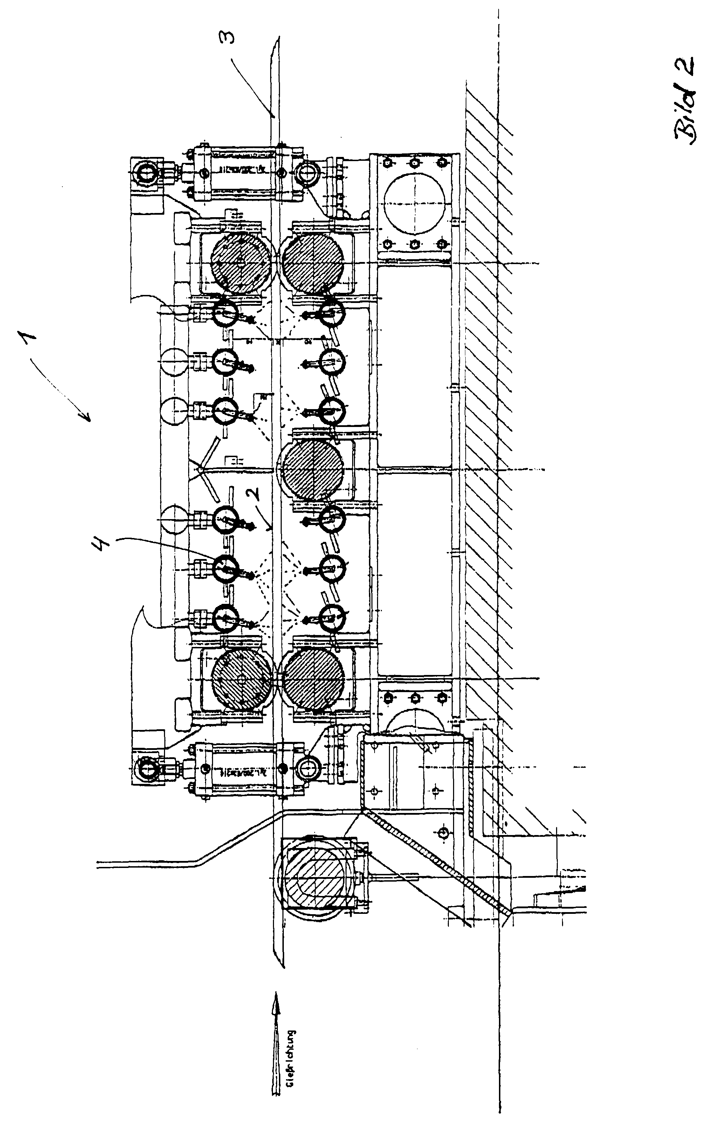

Um sicherzustellen, daß in einer Warmbandproduktionsanlage der beschriebenen Ausführungsform auch Schrott zweiter Wahl ohne Nachteile eingesetzt werden kann, wird vorgeschlagen, vor dem Einlauf in den Rollenherdofen eine Intensivkühlstrecke 1 anzuordnen (vgl. Bild 2). Die Kühlstrecke 1 ist eine Wasser-Kühlstrecke mit mehreren zu- und abschaltbaren Kühlbalken 4. In der Kühlstrecke 1 wird die Oberfläche 2 der Dünnbramme 3 in ausreichender Tiefe auf eine Temperatur unterhalb von Aᵣ3 abgesenkt. Hierdurch wird eine Gefügeumwandlung mit Neuorientierung der Austenit-Korngrenzen nach Wiedererwärmung im Rollenherdofen erzwungen. Die Intensität der Kühlstrecke 1 wird hierbei so gewählt (vgl. Bild 1), daß zur Sicherstellung einer ausreichenden Gefügeumwandlung bis zu einer Tiefe von mindestens 2 mm die Temperatur von 600 °C unterschritten wird, während die durchschnittliche Temperatur auf der Brammenoberfläche oberhalb der Martensitschwelle der jeweiligen Materialgüte bleibt.

Die jeweils einzustellende Mindesttiefe, bis zu der eine Temperatur von 600 °C unterschritten werden soll, bestimmt sich aus der notwendigen Mindestzeit für die Umwandlung von mindestens 70 % von Austenit in Ferrit/Perlit. Abkühltiefe und Abkühlzeit werden im Hinblick auf eine anzustrebende Minimierung des Energieaufwandes für die nachfolgende Wiedererwärmung so gering wie möglich gehalten.

## Patentansprüche

1. Verfahren für die Erzeugung von Warmbreitband in einer Produktionsanlage, bestehend aus einer Stranggießanlage für Dünnbrammen zwischen 40 und 70 mm, einem Ausgleichsofen und einem Walzwerk, wobei die Austrittstemperatur der Dünnbramme aus der Stranggießmaschine oberhalb von 950 °C liegt,
**dadurch gekennzeichnet,**
daß zwischen Stranggießmaschine und Ausgleichsofen die Oberflächentemperatur der Dünnbramme durch Wahl der Kühlintensität bis auf eine Tiefe von mindestens 2 mm unterhalb der Oberfläche auf unter 600 °C abgesenkt wird und die mittlere Oberflächentemperatur der Dünnbramme die Martensitschwelle der jeweiligen Materialgüte nicht unterschreitet und die Abkühlzeit so gewählt ist, daß in der genannten Tiefe von mindestens 2mm mindestens 70 % Austenit in Ferrit/Perlit umgewandelt werden.

2. Verfahren nach Anspruch 1,
**dadurch gekennzeichnet,**
daß eine Zu- und Abschaltung von einzelnen Kühlsektionen in Abhängigkeit von der jeweiligen Gießgeschwindigkeit unter Einhaltung der geforderten Mindestwerte für Abkühltiefe, Abkühltemperatur, Abkühlzeit und Martensitschwelle erfolgt.

## Claims

1. Method of producing hot wide strip in a production plant consisting of a continuous casting plant for thin slabs between 40 and 70 millimetres, an equalising oven and a rolling train, wherein the exit temperature of the thin slabs from the continuous casting machine lies above 950°C, characterised in that the surface temperature of the thin slabs between the continuous casting machine and equalising oven is lowered to below 600°C to a depth of at least 2 millimetres below the surface by selection of the intensity of cooling and the mean surface temperature of the thin slabs does not fall below the martensite threshold of the respective material quality and the cooling time is so selected that in the said depth of at least 2 millimetres at least 70% of austenite are converted into ferrite/perlite.

2. Method according to claim 1, characterised in that a switching-on and switching-off of individual cooling sections is carried out in dependence on the respective casting speed while maintaining the required minimum values for depth of cooling, cooling temperature, cooling time and martensite threshold.

## Revendications

1. Procédé pour la fabrication de bandes larges à chaud, dans une installation de production qui comprend une installation d'extnision pour des brames minces entre 40 et 70 mm, un four d'égalisation et un train de laminage, dans lequel la température de la brame mince sortant de la machine d'extrusion est supérieure à 950 °C,
caractérisé en ce que, entre la machine d'extrusion et le four d'égalisation, la température de surface de la brame mince est abaissée au-dessous de 600 °C en choisissant l'intensité de refroidissement, jusqu'à une profondeur d'au moins 2 mm au-dessous de la surface, et la température de surface moyenne de la brame mince ne passe pas au-dessous du seuil martensitique de la qualité de matériau respective, et le temps de refroidissement est ainsi choisi que dans la profondeur précitée d'au moins 2 mm, au moins 70% d'austénite est converti en ferrite/perlite.

2. Procédé selon la revendication 1,
caractérisé en ce que l'on procède à la mise en route et à l'arrêt de sections de refroidissement individuelles en fonction de la vitesse de coulée respective, en respectant les valeurs minimum requises pour la profondeur de refroidissement, la température de refroidissement, le temps de refroidissement et le seuil martensitique.
